# EUROPEAN PATENT APPLICATION

(11) **EP 4 144 628 A1**
(43) Date of publication of application: **08.03.2023**
(21) Application number: 21797629.9
(22) Date of filing: 15.04.2021
(51) Int. Cl.: B62M 6/45, B62M 6/65

(54) **ELECTRIC-POWER-ASSISTED BICYCLE**

(30) Priority: 27.04.2020 JP 2020094961
(71) Applicant: Sakuta, Koji, Shizuoka 435-8511 (JP)
(72) Inventor: Sakuta, Koji, Shizuoka 435-8511 (JP)
(74) Representative: v. Bezold & Partner Patentanwälte - PartG mbB
(86) International application number: PCT/JP2021/015560
(87) International publication number: WO 2021/220823

(57) **Abstract**

An electric bicycle includes a front wheel (4) drivable by a front wheel electric motor (15) that has a battery (9) as a power supply; a rear wheel (5) drivable by a rear wheel electric motor (16) that has a battery (9) as a power supply; pedals (6) for inputting pedaling force of a driver to at least one of the front wheel (4) or the rear wheel (5); at least one travel operator that inputs a desired travel state of the driver; a front wheel controller (7) that controls a rotation of the front wheel electric motor (15) in accordance with a situation of the front wheel (4) and an input from the travel operator; and a rear wheel controller (8) that controls a rotation of the rear wheel electric motor (16) in accordance with a situation of the rear wheel and an input from the travel operator. Two electric motors, the front wheel electric motor and the rear wheel electric motor, are provided, at least one of the front wheel (4) or the rear wheel (5) is driven by the corresponding electric motor and a load of at least one of the front wheel electric motor (15) or the rear wheel electric motor (16) is reduced by the pedaling force of the driver.

## Description

### Technical Field

The present disclosure relates to an electric bicycle driven by electric power.

### Background Art

In electric two-wheeled vehicles, the pedaling force of a human and the driving force of an electric motor are used for propulsion and, depending on the ratio of the pedaling force to the driving force used, traveling performance and electricity costs corresponding to the respective purposes of electric motorcycles, electric power-assisted bicycles, and the like are demonstrated. For example, electric motorcycles travel using only the driving force of an electric motor, and speeds of about 60 km/h or greater are expected; and electric power-assisted bicycles assist the pedaling force of a human with the driving force of an electric motor, and speeds of about 25 km/h or less are expected.

From the perspective of emission regulations, electric motorcycles that travel using only the driving force of an electric motor have gathered attention as a replacement transportation means for gasoline vehicles. Moreover, the conversion to electric motors eliminates the need for internal combustion engines and other engines and, as such, simplification of the manufacturing process and decreased manufacturing costs are expected.

The conversion to electric motor of a two-wheeled vehicle can be realized as a configuration in which an electric motor is incorporated at the center of the vehicle, or a configuration in which an electric motor is incorporated in a wheel. In the configuration in which the electric motor is incorporated at the center of the vehicle, the driving force of the electric motor is transmitted to a wheel via a chain, a belt, or a similar transmission mechanism. In the configuration in which the electric motor is incorporated in a wheel, the electric motor is incorporated in the front wheel or the rear wheel, and the driving force of the electric motor is transmitted to the wheel without passing through a transmission mechanism. In the configuration in which the electric motor is incorporated into a wheel, a transmission mechanism is unnecessary and the weight can be reduced but, since a single electric motor is incorporated into one of the front wheel and the rear wheel, the center of gravity is offset and vehicle balance becomes unstable. To address this, a front and rear wheel-driven electric two-wheeled vehicle has been proposed in which electric motors are incorporated into the front wheel and the rear wheel (for example, Patent Literature 1).

However, this technology propels the vehicle using the driving force of the electric motor of the front wheel and the electric motor of the rear wheel, and does not use the pedaling force of the human. Consequently, torque of the front wheel is torque that the electric motor of the front wheel outputs, torque of the rear wheel is torque that the electric motor of the rear wheel outputs, and control corresponding to this configuration is required. Control methods for electric motors of front and rear wheels have been proposed for front and rear wheel-driven motorcycles that travel using only the driving force of the electric motors (for example, Patent Literature 2).

Additionally, with an electric power-assisted bicycle that travels using the pedaling force of the human assisted by the driving force of an electric motor, as an operating principle, the electric motor is controlled in accordance with a rotation operation of the pedals so that the torque of the electric motor is output at a constant ratio with respect to pedaling force torque from the pedals. Among electric bicycles in which an electric motor is attached to the front wheel and an electric motor is attached to the rear wheel, a method for operating the electric motors of the front and rear wheels by the pedals has been proposed (for example, Patent Literature 3).

### Citation List

### Patent Literature

Patent Literature 1: Unexamined Japanese Patent Application Publication No. 2019-31233
Patent Literature 2: Unexamined Japanese Patent Application Publication No. 2013-533821
Patent Literature 3: Unexamined Japanese Patent Application Publication No. 2012-197038

### Summary of Invention

### Technical Problem

However, with conventional electric two-wheeled vehicles and electric power-assisted bicycles, there is a problem in that power consumption cannot be easily suppressed.

The present disclosure is made with the view of the above situation, and an objective of the present disclosure is to provide an electric bicycle that is capable of suppressing power consumption.

### Solution to Problem

An electric bicycle according to a first aspect includes a front wheel drivable by a front wheel electric motor that has a battery as a power supply; a rear wheel drivable by a rear wheel electric motor that has a battery as a power supply; pedals for inputting pedaling force of a driver to at least one of the front wheel or the rear wheel; at least one travel operator that inputs a desired travel state of the driver; a front wheel controller that controls a rotation of the front wheel electric motor in accordance with a situation of the front wheel and an input from the travel operator; and a rear wheel controller that controls a rotation of the rear wheel electric motor in accordance with a situation of the rear wheel and an input from the travel operator, wherein two electric motors, the front wheel electric motor and the rear wheel electric motor, are provided, at least one of the front wheel or the rear wheel is driven by the corresponding electric motor and a load of at least one of the front wheel electric motor or the rear wheel electric motor is reduced by the pedaling force of the driver.

An electric bicycle according to a second aspect further includes a front wheel brake lever that inputs a braking amount of the front wheel, wherein at least one of control, by the front wheel controller, of the rotation of the front wheel electric motor in accordance with a braking amount command from the front wheel brake lever, or control, by the rear wheel controller, of the rotation of the rear wheel electric motor in accordance with the braking amount command from the front wheel brake lever is performed.

An electric bicycle according to a third aspect further includes a rear wheel brake lever that inputs a braking amount of the rear wheel, wherein at least one of control, by the rear wheel controller, of the rotation of the rear wheel electric motor in accordance with a braking amount command from the rear wheel brake lever, or control, by the front wheel controller, of the rotation of the front wheel electric motor in accordance with the braking amount command from the rear wheel brake lever is performed.

An electric bicycle according to a fourth aspect further includes a front wheel brake lever that inputs a braking amount of the front wheel; and a front wheel mechanical brake structure for the front wheel, wherein at least one of control, by the front wheel controller, of the rotation of the front wheel electric motor in accordance with a braking amount command from the front wheel brake lever, or control, by the rear wheel controller, of the rotation of the rear wheel electric motor in accordance with the braking amount command from the front wheel brake lever is performed, and the front wheel mechanical brake structure can be operated by the front wheel brake lever.

An electric bicycle according to a fifth aspect further includes a rear wheel brake lever that inputs a braking amount of the rear wheel; and a rear wheel mechanical brake structure for the rear wheel, wherein at least one of control, by the rear wheel controller, of the rotation of the rear wheel electric motor in accordance with a braking amount command from the rear wheel brake lever, or control, by the front wheel controller, of the rotation of the front wheel electric motor in accordance with the braking amount command from the rear wheel brake lever is performed, and the rear wheel mechanical brake structure can be operated by the rear wheel brake lever.

An electric bicycle according to a sixth aspect includes a front wheel drivable by a front wheel electric motor that has a battery as a power supply; a rear wheel drivable by a rear wheel electric motor that has a battery as a power supply; pedals for inputting pedaling force of a driver to at least one of the front wheel or the rear wheel; at least one travel operator that inputs a desired travel state of the driver; a front wheel controller that controls a rotation of the front wheel electric motor in accordance with a situation of the front wheel and an input from the travel operator; and a rear wheel controller that controls a rotation of the rear wheel electric motor in accordance with a situation of the rear wheel and an input from the travel operator, wherein two electric motors, the front wheel electric motor and the rear wheel electric motor, are provided, at least one of the front wheel or the rear wheel is driven by the corresponding electric motor and a load of at least one of the front wheel electric motor or the rear wheel electric motor is reduced by the pedaling force of the driver, and at least one of the front wheel controller or the rear wheel controller performs regeneration control.

With an electric bicycle according to a seventh aspect, at least one of the front wheel controller or the rear wheel controller performs the regeneration control in accordance with a traveling situation of the electric bicycle.

An electric bicycle according to an eighth aspect further includes a front wheel brake lever that inputs a braking amount of the front wheel, wherein at least one of the regeneration control, by the front wheel controller, in accordance with a braking amount command from the front wheel brake lever, or the regeneration control, by the rear wheel controller, in accordance with the braking amount command from the front wheel brake lever is performed.

An electric bicycle according to a ninth aspect further includes a rear wheel brake lever that inputs a braking amount of the rear wheel, wherein at least one of the regeneration control, by the rear wheel controller, in accordance with a braking amount command from the rear wheel brake lever, or the regeneration control, by the front wheel controller, in accordance with the braking amount command from the rear wheel brake lever is performed.

An electric bicycle according to a tenth aspect further includes a front wheel brake lever that inputs a braking amount of the front wheel; and a front wheel mechanical brake structure for the front wheel, wherein at least one of the regeneration control, by the front wheel controller, in accordance with a braking amount command from the front wheel brake lever, or the regeneration control, by the rear wheel controller, in accordance with the braking amount command from the front wheel brake lever is performed, and the front wheel mechanical brake structure can be operated by the front wheel brake lever.

An electric bicycle according to a eleventh aspect further includes a rear wheel brake lever that inputs a braking amount of the rear wheel; and a rear wheel mechanical brake structure for the rear wheel, wherein at least one of the regeneration control, by the rear wheel controller, in accordance with a braking amount command from the rear wheel brake lever, or the regeneration control, by the front wheel controller, in accordance with the braking amount command from the rear wheel brake lever is performed, and the rear wheel mechanical brake structure can be operated by the rear wheel brake lever.

An electric bicycle according to a twelfth aspect further includes a regeneration switch that inputs information about the regeneration control of at least one of the front wheel or the rear wheel, wherein at least one of the regeneration control, by the front wheel controller, in accordance with the information about the regeneration control from the regeneration switch, or the regeneration control, by the rear wheel controller, in accordance with the information about the regeneration control from the regeneration switch is performed.

An electric bicycle according to a thirteenth aspect further includes a front wheel regeneration switch that inputs information about the regeneration control of the front wheel, wherein at least one of the regeneration control, by the front wheel controller, in accordance with the information about the regeneration control from the front wheel regeneration switch, or the regeneration control, by the rear wheel controller, in accordance with the information about the regeneration control from the front wheel regeneration switch is performed.

An electric bicycle according to a fourteenth aspect further includes a rear wheel regeneration switch that inputs information about the regeneration control of the rear wheel, wherein at least one of the regeneration control, by the rear wheel controller, in accordance with the information about the regeneration control from the rear wheel regeneration switch, or the regeneration control, by the front wheel controller, in accordance with the information about the regeneration control from the rear wheel regeneration switch is performed.

With an electric bicycle according to a fifteenth aspect, the front wheel controller and the rear wheel controller control the front wheel electric motor and the rear wheel electric motor such that a difference between torque of the front wheel and torque of the rear wheel is less than or equal to 10%.

With an electric bicycle according to a sixteenth aspect, the front wheel controller and the rear wheel controller control the front wheel electric motor and the rear wheel electric motor such that torque of the front wheel is greater than or equal to torque of the rear wheel.

With an electric bicycle according to a seventeenth aspect, the front wheel controller and the rear wheel controller control the front wheel electric motor and the rear wheel electric motor such that torque of the rear wheel is greater than or equal to torque of the front wheel.

An electric bicycle according to an eighteenth aspect further includes pedal torque measuring means that measure a pedaling force torque from the pedals, wherein the front wheel controller and the rear wheel controller control such that the pedaling force torque measured by the pedal torque measuring means and a value obtained by summing torque of the front wheel electric motor and torque of the rear wheel electric motor have a predetermined ratio.

With an electric bicycle according to a nineteenth aspect, the front wheel controller and the rear wheel controller control such that an angular velocity of the front wheel electric motor and an angular velocity of the rear wheel electric motor are less than or equal to a predetermined value.

With an electric bicycle according to a twentieth aspect, the front wheel controller and the rear wheel controller control such that a value obtained by summing a motor output of the front wheel electric motor and a motor output of the rear wheel electric motor is less than or equal to a predetermined value.

### Advantageous Effects of Invention

According to the invention of the present application, two electric motors are provided, and the front wheel and the rear wheel are driven by the electric motors. Moreover, the load of the front wheel electric motor and/or the rear wheel electric motor is reduced by the pedaling force of the driver. As a result, power consumption can be suppressed.

### Brief Description of Drawings

FIG. 1 is an explanatory drawing illustrating an example of the entirety of an electric bicycle according to an embodiment of the present disclosure;
FIG. 2 is an explanatory drawing illustrating a front wheel of the electric bicycle;
FIG. 3 is an explanatory drawing illustrating a rear wheel of the electric bicycle;
FIG. 4 is an explanatory drawing illustrating a rear wheel electric motor of the electric bicycle, in an exploded state; and
FIG. 5 is an explanatory drawing illustrating an example of the configuration of the electric bicycle.

### Description of Embodiments

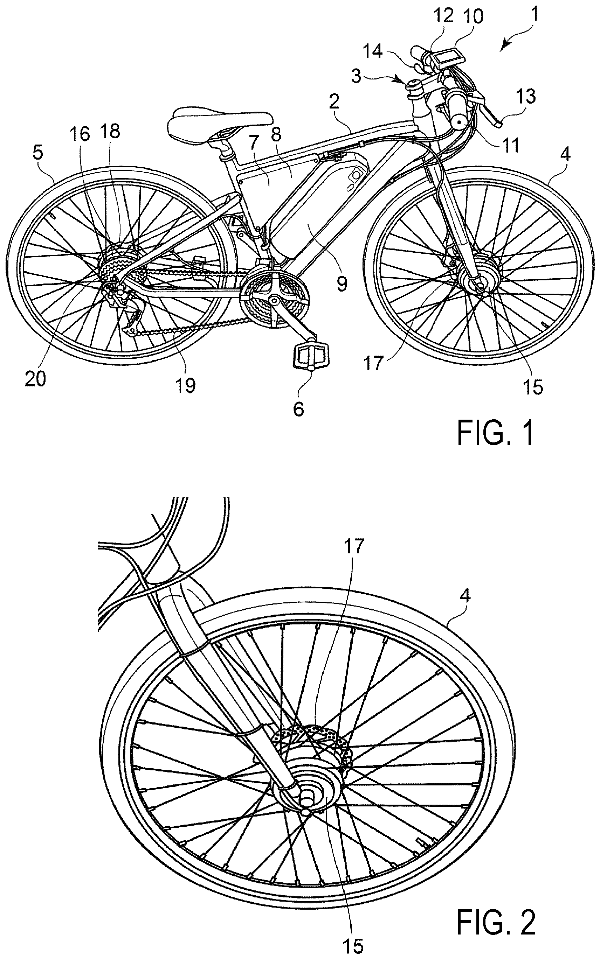

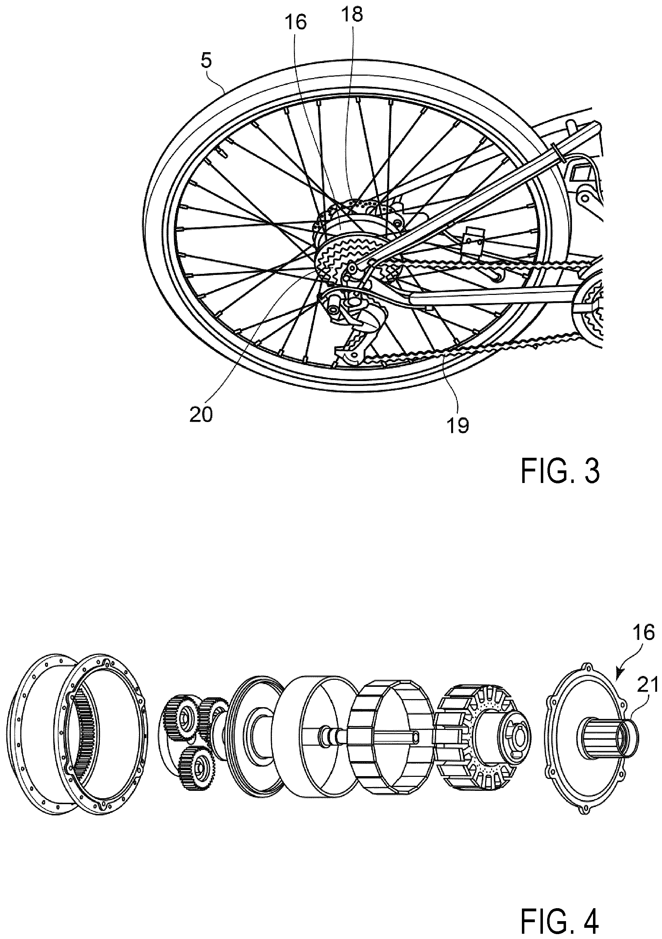

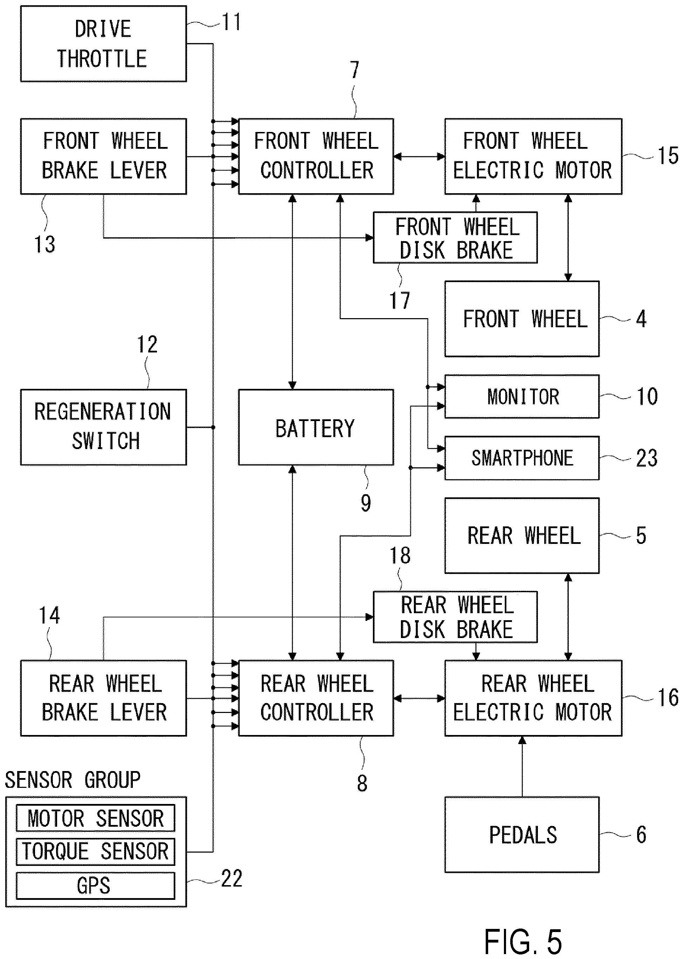

Hereinafter, embodiments of the present disclosure are described in detail while referencing the drawings. FIG. 1 is an explanatory drawing illustrating an example of the entirety of an electric bicycle according to an embodiment of the present disclosure. FIG. 2 is an explanatory drawing illustrating a front wheel of the electric bicycle. FIG. 3 is an explanatory drawing illustrating a rear wheel of the electric bicycle. FIG. 4 is an explanatory drawing illustrating a rear wheel electric motor of the electric bicycle, in an exploded state. FIG. 5 is an explanatory drawing illustrating an example of the configuration of the electric bicycle.

The overall configuration of an electric bicycle 1 according to the present disclosure, shared by the hereinafter described Embodiment 1 and Embodiment 2, is described. As illustrated in FIG. 1, the electric bicycle 1 includes a frame 2, a hereinafter described handlebar 3, a front wheel 4, a rear wheel 5, pedals 6, a front wheel controller 7, a rear wheel controller 8, a battery 9, a travel operator, namely a drive throttle 11, a front wheel brake lever 13, a rear wheel brake lever 14, a front wheel electric motor 15, a rear wheel electric motor 16, a front wheel disk brake 17 that is a front wheel mechanical brake structure, a rear wheel disk brake 18 that is a rear wheel mechanical brake structure, and the like.

The electric bicycle 1 according to the present disclosure is characterized in that two electric motors are provided and the front wheel 4 and/or the rear wheel 5 is driven by the electric motors, and the load of the front wheel electric motor 15 and/or the rear wheel electric motor 16 is reduced by pedaling force of a driver. Note that the electric bicycle 1 described in the present disclosure is described as a single-seater bicycle that includes one each of the front wheel 4 and the rear wheel 5, but is not limited to a single-seater, and can be applied to multiple-seater tandem vehicles and other forms as well.

The handlebar 3 is a constituent whereby the driver operates, by hand, a direction the front wheel 4 faces (direction the electric bicycle 1 advances). In one example, as illustrated in FIG. 1, the handlebar 3 has a laid-down rod shape. A monitor 10 that displays traveling information such as speed, travel distance, power consumption, battery level, and the like is provided in a center section of the handlebar 3, and the drive throttle 11 that is a travel operator, the front wheel brake lever 13, the rear wheel brake lever 14, and the like are provided on the handlebar 3.

The electric bicycle 1 of the present disclosure includes two electric motors as essential constituents. The front wheel electric motor 15 is attached to a rotational shaft of the front wheel 4 as illustrated in FIG. 2, and the rear wheel electric motor 16 is attached to a rotational shaft of the rear wheel 5 as illustrated in FIG. 3. A structure is provided in which the front wheel 4 is drivable by the front wheel electric motor 15 that has the battery 9 as a power supply, and the rear wheel 5 is drivable by the rear wheel electric motor 16 that has the battery 9 as a power supply. As described above, the front wheel 4 and the rear wheel 5 have configurations driven by the electric motors. However, the front wheel 4 and the rear wheel 5 are not limited to being driven constantly by the electric motors, namely the front wheel electric motor 15 and the rear wheel electric motor 16 and, at times, the front wheel 4 and/or the rear wheel 5 rotate free from the electric motors. Moreover, the combination of being driven and rotating freely changes appropriately in accordance with the traveling state or the like of the electric bicycle 1.

In some cases, the direction of rotation of the front wheel 4 or the rear wheel 5 that is driven by the front wheel electric motor 15 or the rear wheel electric motor 16 is a rotation direction in which the electric bicycle 1 advances, and in other cases is a rotation direction in which the electric bicycle 1 retreats; but is not limited to advancing and retreating.

As illustrated in FIG. 4, brush-less DC motors are used for the front wheel electric motor 15 and the rear wheel electric motor 16. The front wheel electric motor 15 and the rear wheel electric motor 16 each include a planetary gear mechanism, and a brush-less DC motor including a three-phase winding and neodymium magnets. Note that, provided that control by the supply of power from the battery 9 is possible, the electric motors, namely the front wheel electric motor 15 and the rear wheel electric motor 16 may be DC motors or AC motors, or electric motors, such as an electric motor without a planetary gear mechanism, an electric motor in which a drum brake is installed, an electric motor other than DC brush-less motors, or the like, may be used. The configuration of the battery 9 itself is not limited provided that power can be supplied to the front wheel electric motor 15 and the rear wheel electric motor 16 and, for example, a plurality of the battery 9 may be provided. Moreover, the battery 9 is not limited by the physical properties of a secondary battery.

With the electric bicycle 1 of the present embodiment, outer peripheries of the front wheel electric motor 15 and the rear wheel electric motor 16 have a hub structure, and are connected to the wheels by spokes. The internal structures of the front wheel electric motor 15 and the rear wheel electric motor 16 are the same, but a ratchet 21 is attached to the outer periphery of the rear wheel electric motor 16, and the pedaling force of the pedals 6 is transmittable to the outer periphery of the rear wheel electric motor 16 through a chain 19, a gear 20, and the ratchet 21. Moreover, when the front wheel electric motor 15 and/or the rear wheel electric motor 16 is driven, the torque is generated by a rotor configured on the outside of a stator, is transmitted to the outer periphery of the electric motor through the planetary gear mechanism, and causes the electric bicycle 1 to travel.

Furthermore, the wire-driven front wheel disk brake 17 and rear wheel disk brake 18 are respectively attached to the outer peripheries of the front wheel electric motor 15 and the rear wheel electric motor 16 and, when braking, can decelerate or stop the electric bicycle 1 using the mechanical brake structures. Note that the front wheel brake lever 13 and the rear wheel brake lever 14 need not necessarily be provided on the handlebar 3, and are not limited to configurations that are operated by hand. For example, the front wheel brake lever 13 and the rear wheel brake lever 14 may be configured to be operated by foot or the like, and any combination of configurations may be used.

A detailed description is given hereinafter about how the traveling state of the electric bicycle 1 changes in accordance with operations of the front wheel brake lever 13 and the rear wheel brake lever 14, but a configuration is possible in which the front wheel brake lever 13 or the rear wheel brake lever 14 causes only the front wheel disk brake 17 or the rear wheel disk brake 18, which are the mechanical brake structures of the front wheel 4 and the rear wheel 5, to operate.

The transmission mechanisms, namely the chain 19, the gear 20, and the ratchet 21, are attached such that pedals 6 transmit the pedaling force from when the pedals are pedaled to the outer periphery of the rear wheel electric motor 16. It is sufficient that the transmission mechanisms transmit the pedaling force to the rear wheel, and are not limited to the chain 19, the gear 20, and the ratchet 21. In the illustrated example, the pedaling force from the pedals 6 is input to the rear wheel 5 side, but need not necessarily be to the rear wheel 5 side, and a configuration is possible in which the pedaling force from the pedals 6 is input to the front wheel 4 side or to both the front wheel 4 side and the rear wheel 5 side. The electric bicycle 1 has a configuration whereby the load of the front wheel electric motor 15 and/or the rear wheel electric motor 16 is reduced by the pedaling force of the driver.

The front wheel controller 7 controls the rotation of the front wheel electric motor 15 in accordance with the situation of the front wheel 4, a desired travel state of the driver input from the drive throttle 11 that is the travel operator, or the like. The rear wheel controller 8 controls the rotation of the rear wheel electric motor 16 in accordance with the situation of the rear wheel 5, the desired travel state of the driver input from the drive throttle 11 that is the travel operator, or the like.

Note that the front wheel controller 7 and the rear wheel controller 8 are configured from a computer (for example, a microcomputer) and software that causes the computer (microcomputer) to function. Information for the control is incorporated into the front wheel electric motor 15 and the rear wheel electric motor 16 as electronic information, and the control of the front wheel electric motor 15 and the rear wheel electric motor 16 is carried out by an information processing means. However, the front wheel controller 7 and the rear wheel controller 8 are not limited to being configured from a computer and software, and may be configured from a logic board that does not includes software. That is, it is sufficient that the front wheel controller 7 and the rear wheel controller 8 are capable of controlling the front wheel electric motor 15 and the rear wheel electric motor 16.

As illustrated in FIG. 5, the battery 9, the monitor 10, the drive throttle 11, the front wheel electric motor 15, a sensor group 22, and the like are connected to the front wheel controller 7. The front wheel controller 7 is housed in a non-illustrated housing and provided on the electric bicycle 1. As illustrated in FIG. 5, the battery 9, the monitor 10, the drive throttle 11, the rear wheel electric motor 15, the sensor group 22, and the like are connected to the rear wheel controller 8. The rear wheel controller 8 is housed in a non-illustrated housing and provided on the electric bicycle 1. Note that the front wheel controller 7 and the rear wheel controller 8 are disposed in a central housing of the frame 2, but may be integrated with the battery 9, or may be disposed inside the front wheel electric motor 15 and inside the rear wheel electric motor 16, respectively. Furthermore, it is possible to configure the front wheel controller 7 and the rear wheel controller 8 from, for example, a smartphone 23 that is the electronic information terminal illustrated in FIG. 5.

Note that, in one example, the sensor group 22 is configured from a pedaling force torque sensor that is a pedal torque measuring means that measures, as pedaling force torque, the pedaling force of the driver input from the pedals 6, a motor sensor that detects rotation torque, rotation speed, or the like of the front wheel electric motor 15 and the rear wheel electric motor 16, and the like. The pedaling force torque sensor may detect the pedaling force torque using a torque sensor that is physically attached to the pedals 6, or may use an indirect method for calculating the pedaling force torque from the values of the torque sensors by providing torque sensors on the front wheel 4 and the rear wheel 5. However, the pedaling force torque sensor is not limited thereto. The motor sensor may be attached to the inside of each of the two electric motors, detect magnetism or the like, and emit a sensor signal, but the configuration of the motor sensor is not limited thereto.

Here, the situation of the front wheel 4 that the front wheel controller 7 uses as basic information for control is the rotation state of the front wheel 4 such as the rotation speed or the rotation torque of the front wheel 4 obtained from the sensor group 22 or the like, and is also the traveling situation of the electric bicycle 1 and, as such may be the rotation state of the rear wheel 5 such as the rotation speed or the rotation torque or the traveling situation or the like of the entire electric bicycle 1. The situation of the rear wheel 5 that the rear wheel controller 8 uses as basic information for control is the rotation state of the rear wheel 5 such as the rotation speed or the rotation torque of the rear wheel 5 obtained from the sensor group 22 or the like, and is also the traveling situation of the electric bicycle 1 and, as such may be the rotation state of the front wheel 4 such as the rotation speed or the rotation torque or the traveling situation or the like of the entire electric bicycle 1.

The front wheel controller 7 controls the rotation of the front wheel electric motor 15 also in accordance with the desired travel state of the driver input from the drive throttle 11 that is the travel operator. The rear wheel controller 8 controls the rotation of the rear wheel electric motor 16 also in accordance with the desired travel state of the driver input from the drive throttle 11 that is the travel operator.

The travel operator of the present disclosure is implemented as the drive throttle 11 and is a rotatable cylindrical structure near an end of the handlebar 3. The driver uses the travel operator to input the desired traveling state of the driver in accordance with a rotation amount that the driver rotates while squeezing the travel operator by hand. The travel operator can have any configuration provided that the desired traveling state of the driver can be input. For example, the travel operator may have a configuration such as a foot pedal. Additionally, any combination and number of travel operators can be used.

With the electric bicycle 1 of the present disclosure, one drive throttle 11 is attached and, as such, the front wheel controller 7 and the rear wheel controller 8 receive the same operation signal. However, a plurality of travel operators (for example, the drive throttle 11) may be attached. For example, a throttle for operating the driving of the front wheel electric motor 15 and a throttle for operating the driving of the rear wheel electric motor 16 may be attached to the handlebar 3, the front wheel controller 7 may be wired to the throttle for operating the driving of the front wheel electric motor 15 and the rear wheel controller 8 may be wired to the throttle for operating the driving of the rear wheel electric motor 16, and the front wheel controller 7 and the rear wheel controller 8 may receive different operation signals from the travel operators.

Furthermore, the drive throttle 11 that is the travel operator is not limited to a structure whereby the travel state in the direction of advancing (positive direction of) the electric bicycle 1 is input, and may be a structure whereby the travel state in a direction of backing up (negative direction of) the electric bicycle 1 can be input. Additionally, the drive throttle 11 may be capable of inputting, as the travel state, an input for stopping the electric bicycle 1. With the drive throttle 11 that is a travel operator of the present disclosure, operation in the positive direction and the negative direction with respect to a reference position is possible, the rotation direction, namely the positive direction and the opposite direction, of the front wheel electric motor 15 and the rear wheel electric motor 16 can be input by the operation direction, the desired travel state of the driver can be input by an operation amount (amount rotated), and the drive throttle 11 emits an analog voltage operation signal corresponding to the operation amount.

Note that, in the control of the front wheel controller 7 and the rear wheel controller 8, it is possible to control the front wheel controller 7 and the rear wheel controller 8 in completely different manners, including different rotation directions of the front wheel electric motor 15 and the rear wheel electric motor 16. For example, control may be performed in which the rotation directions of the front wheel 4 and the rear wheel 5 are opposite each other such as a case in which the front wheel 4 rotates in the positive direction and the rear wheel 5 rotates in the negative direction, control may be performed in which one of the front wheel 4 and the rear wheel 5 is rotated and the other thereof is stopped, or control may be performed in which the front wheel 4 and/or the rear wheel 5 is freely rotatable.

In FIG. 5, the front wheel controller 7 and the rear wheel controller 8 are different constituents and the electric motors of the front wheel 4 and the rear wheel 5 are different and, as such, each must be controlled. However, one controller may be provided as a control means with the functions of the front wheel controller 7 and the functions of the rear wheel controller 8. For example, the functions of the front wheel controller 7 and the rear wheel controller 8 may be provided to a computer. Furthermore, the front wheel controller 7 may control the rear wheel electric motor 16, and the rear wheel controller 8 may control the front wheel electric motor 15. Moreover, the front wheel controller 7 and the rear wheel controller 8 may cooperate to control the front wheel electric motor 15 and the rear wheel electric motor 16 (in the configuration of FIG. 5, the front wheel controller 7 and the rear wheel controller 8 are connected so as to enable the exchange of information). Of course, the front wheel controller 7 and the rear wheel controller 8 may each perform control in a completely independent manner.

With a typical bicycle, the front wheel brake lever 13 and the rear wheel brake lever 14 are constituents for operating only the front wheel disk brake 17 or the rear wheel disk brake 18 that are the mechanical brake structures of the front wheel 4 and the rear wheel 5. However, with the electric bicycle 1 of the present disclosure, the front wheel disk brake 13 and the rear wheel disk brake 14 may be further provided with functions other than operating the front wheel disk brake 17 and the rear wheel disk brake 18.

Examples of the other functions of the front wheel brake lever 13 include a means for inputting a braking amount command for the front wheel controller 7 to control the rotation of the front wheel electric motor 15. Examples of the other functions of the rear wheel brake lever 14 include a means for inputting a braking amount command for the rear wheel controller 8 to control the rotation of the rear wheel electric motor 16. Furthermore, the front wheel brake lever 13 may be used as a means for inputting the braking amount command for the rear wheel controller 8 to control the rotation of the rear wheel electric motor 16, or the rear wheel brake lever 14 may be used as a means for inputting the braking amount command for the front wheel controller 7 to control the rotation of the front wheel electric motor 15. Moreover, any combination of functions of the front wheel brake lever 13 and the rear wheel brake lever 14 may be used.

Note that, fundamentally, torque control is used for the control of the front wheel motor 15 and the rear wheel motor 16 performed by the front wheel controller 7 and the rear wheel controller 8. As necessary, speed control may be used, or a combination of torque control and speed control, another control method, or a combination of these control methods may be used. In accordance with the situation of the front wheel 4 and the input from the drive throttle 11 that is the travel operator, the front wheel controller 7 supplies current and voltage to the front wheel electric motor 15 and drives the front wheel electric motor 15 by torque control. In accordance with the situation of the rear wheel 5 and the input from the drive throttle 11 that is the travel operator, the rear wheel controller 8 supplies current and voltage to the rear wheel electric motor 16 and drives the rear wheel electric motor 16 by torque control. Additionally, the front wheel controller 7 and the rear wheel controller 8 calculate the output torque and the power consumption when traveling and, on the basis of those results, can perform control of the front wheel electric motor 15 and the rear wheel electric motor 16, and can suppress the power consumption.

The monitor 10 displays information such as the speed, the travel distance, the power consumption, and the battery level during traveling. Additionally, settings such as selection of a travel mode when stopped, selection of a country of travel, and control parameters can be performed, and the selected settings are input into the front wheel controller 7 and the rear wheel controller 8. The front wheel controller 7 and the rear wheel controller 8 control, on the basis of the settings, current and voltage supplied to the front wheel electric motor 15 and the rear wheel electric motor 16, the torque, output by the front wheel electric motor 15 and the rear wheel electric motor 16, relative to the pedaling force torque, angular velocities of the front wheel electric motor 15 and the rear wheel electric motor 16, outputs of the front wheel electric motor 15 and the rear wheel electric motor 16, and the like. Via the monitor, the driver can suppress the power consumption by selecting a desired traveling performance and power consumption, and selecting an optimal travel mode suited to the road surface condition.

A wide variety of combinations of the various constituents is possible as a configuration of a control system of the electric bicycle 1 according to the present disclosure. However, as the fundamental configuration for the electric bicycle 1 of the present disclosure, the front wheel controller 7 supplies current and voltage to drive the front wheel electric motor 15 by torque control on the basis of signals from the sensor group 22 such as the operation signal of the drive throttle 11, the motor signal of the front wheel electric motor 15, and the like, and the rear wheel controller 8 supplies current and voltage to drive the rear wheel electric motor 16 by torque control on the basis of signals from the sensor group 22 such as the operation signal of the drive throttle 11, the motor signal of the rear wheel electric motor 16, and the like. Note that, as described above, the front wheel controller 7 may perform the torque control also in accordance with the operation amount of the front wheel brake lever 13, and the rear wheel controller 8 may perform the torque control also in accordance with the operation amount of the rear wheel brake lever 14.

With the electric bicycle 1 of the present disclosure, when the pedals 6 are pedaled while the drive throttle 11 is being operated, the pedaling force is transmitted to the rear wheel electric motor 16. The torque of the front wheel 4 at this time is the torque output by the front wheel electric motor 15, and the torque of the rear wheel 5 at this time is a value obtained by summing the torque output by the rear wheel electric motor 16 and the pedaling force torque of the pedals 6. To obtain the torque needed for traveling, the rear wheel controller 8 can assist the torque output by the rear wheel electric motor 16 with the pedaling force torque of the pedals 6, and can suppress the power consumption of the rear wheel electric motor 16. Additionally, the front wheel controller 7 and the rear wheel controller 8 perform control after the torque output by the front wheel electric motor 15 and the torque output by the rear wheel electric motor 16 are assisted with the pedaling force torque of the pedals 6 and, as a result, the power consumption of the front wheel electric motor 15 and the rear wheel electric motor 16 can be suppressed.

Hereinafter, a description is given of the control of the front wheel electric motor 15 and the rear wheel electric motor 16 that is carried out when various travel modes are selected. In a dual-drive mode (name of a mode in which both wheels are driven substantially equally), the front wheel electric motor 15 and the rear wheel electric motor 16 are torque-controlled such that a torque difference between the torque of the front wheel 4 and the torque of the rear wheel 5 is within 10%. In a front-drive mode (name of a mode in which the front wheel 4 is mainly driven), the front wheel electric motor 15 and the rear wheel electric motor 16 are torque-controlled such that the torque of the front wheel 4 is greater than or equal to the torque of the rear wheel 5. In a rear-drive mode (name of a mode in which the rear wheel 5 is mainly driven), the front wheel electric motor 15 and the rear wheel electric motor 16 are torque-controlled such that the torque of the rear wheel 5 is greater than or equal to the torque of the front wheel 4. In an assisted-drive mode (name of a mode in which the pedaling force is predominant), the front wheel electric motor 15 and the rear wheel electric motor 16 are torque-controlled such that a value, obtained by summing the torque of the front wheel electric motor 15 and the torque of the rear wheel electric motor 16, with respect to the pedaling force torque of the pedals 6 is a constant ratio.

Regulations for electric bicycles differ by country, and the speed and the motor output must be controlled in accordance with the country of travel. In a setting of a maximum speed of the electric bicycle 1, the angular velocities of the front wheel electric motor 15 and the rear wheel electric motor 16 are controlled such that the speed of the electric bicycle 1 does not become greater than or equal to a set speed. In settings of maximum outputs of the front wheel electric motor 15 and the rear wheel electric motor 16, the currents and the voltages of the front wheel electric motor 15 and the rear wheel electric motor 16 are controlled such that a value obtained by summing a motor output of the front wheel electric motor 15 and a motor output of the rear wheel electric motor 16 does not become greater than or equal to a set motor output.

The smartphone 23 can use various types of communication methods to carry out mutual wired communication or wireless communication with wireless receivers of the front wheel controller 7 and the rear wheel controller 8 and, in the same manner as the monitor 10, settings such as selection of the travel mode, selection of the country of travel, and control parameters can be performed. Additionally, the front wheel controller 7 and the rear wheel controller 8 send, to the smartphone 23, traveling information, position information from a GPS, and the like. The traveling information, the position information, and the like are stored on the smartphone 23 or on a cloud via an electronic information communication line, and can be used in power consumption predictions, maintenance services of the electric bicycle 1, position information services for theft prevention, marketing, and other applications. Additionally, the smartphone 23 can be used as a travel operator, and can also operate the electric bicycle 1 from a remote location to disable traveling of the electric bicycle 1 in cases of theft or the like.

The invention of the present disclosure is an electric bicycle 1 that travels by assisting the driving force of electric motors with the pedaling force of a human, and the technical concept with respect to the pedaling force of a human differs from that of an electric motorcycle that travels only by the driving force of an electric motor or an electric power-assisted bicycle that travels by assisting the pedaling force of a human with the driving force of an electric motor. As such, in order to further suppress power consumption, optimal configurations, control, and operation, different from those of electric motorcycles and electric power-assisted bicycles, are needed.

In the front and rear wheel-driven electric motorcycle of Patent Literature 1, the electric motor of the front wheel and the electric motor of the rear wheel are controlled with the torque of the front wheel being the torque output by the electric motor of the front wheel and the torque of the rear wheel being the torque output by the electric motor of the rear wheel. However, in the front and rear wheel-driven electric bicycle 1 of the present disclosure, the pedaling force from the pedals 6 is input into the rear wheel 5 and, as such, the front wheel electric motor 15 and the rear wheel electric motor 16 are controlled with the torque of the front wheel 4 being the torque output by the front wheel electric motor 15 and the torque of the rear wheel 5 being the value obtained by summing the torque output by the rear wheel electric motor 16 and the pedaling force torque of the pedals 6. Additionally, although the pedaling force torque from the pedals 6 can be used to assist the driving force of the electric motor, in order to suppress power consumption, the driver determines the travel situation and the road surface condition and operates the front wheel electric motor 15 and the rear wheel electric motor 16 at intended timings via operations of the drive throttle 11, independent of the rotation operation of the pedals 6.

The electric bicycle 1 having a configuration such as described above can use the pedaling force to assist the driving force of the electric motors at intended timings of the driver, and can suppress power consumption. Note that, due to the operability of the electric bicycle 1 being enhanced, it is expected that new traveling performances will be imparted to electric bicycles. For example, it is expected that mountainous areas that were conventionally difficult to travel will become travelable by mountain bikes or the like, new tricks will become performable on BMX bikes, and the like.

Note that it is possible to perform regeneration control using the front wheel controller 7 and/or the rear wheel controller 8. This regeneration control is described in detail in an embodiment of a case in which regeneration control is performed.

### Embodiment 1

Hereinafter, an electric bicycle 1 in which regeneration control is not performed is described. Note that, although FIGS. 1 and 5 illustrate configurations of a case in which regeneration control is performed, the operations and the like of a case in which regeneration control is not performed are also described using FIG. 5. The configuration of the electric bicycle 1 of Embodiment 1 is as described above.

When, in a state in which the driver is riding the electric bicycle 1, the driver rotates the drive throttle 11 from the reference position in the direction of advancing (the positive direction), the rotated amount is transmitted to the front wheel controller 7 and the rear wheel controller 8 as the desired travel state of the driver, and the front wheel controller 7 and the rear wheel controller 8 drive the front wheel electric motor 15 and the rear wheel electric motor 16. As a result, the electric bicycle 1 gradually advances. The electric bicycle 1 starts to advance and, then, reaches the desired vehicle speed that is the desired travel state of the driver.

When the driver desires to simply increase the speed or desires to re-increase the speed lost when on an uphill slope to the previous speed, the driver rotates the drive throttle 11 further in the direction of advancing (the positive direction). As a result, the electric bicycle 1 accelerates or, in the case of a slope, maintains the speed.

When the drive throttle 11 is moved in a direction of returning to the reference position while the electric bicycle 1 is traveling, the desired travel state of the driver is transmitted, as deceleration or stopping, to the front wheel controller 7 and the rear wheel controller 8, and the front wheel controller 7 and the rear wheel controller 8 decelerate the front wheel electric motor 15 and the rear wheel electric motor 16 in accordance with the return amount of the drive throttle 11; and when the drive throttle 11 is returned to the reference position, the front wheel controller 7 and the rear wheel controller 8 control so as to stop the front wheel electric motor 15 and the rear wheel electric motor 16. However, in actuality, when traveling, the electric bicycle 1 requires time to decelerate or stop when only the electric motors are controlled and, as such, the driver operates the front wheel brake lever 13 or the rear wheel brake lever 14 to adjust the speed or to stop.

Thus, the drive throttle 11 can be operated in the positive direction and the negative direction with respect to the reference position, and emits analog voltage operation signals for operating the rotation direction, namely the positive rotation and the negative rotation, in accordance with the operation direction, and for operating the driving force of the electric motors in accordance with the operation amount. The front wheel controller 7 supplies the current and the voltage on the basis of the operation signals of the drive throttle 11 and the motor signals of the front wheel electric motor 15, and drives the front wheel electric motor 15 by torque control. The rear wheel controller 8 supplies the current and the voltage on the basis of the operation signals of the drive throttle 11 and the motor signals of the rear wheel electric motor 16, and drives the rear wheel electric motor 16 by torque control.

When the driver pedals the pedals 6 while the electric bicycle 1 is traveling (during positive direction operation of the drive throttle 11), the pedaling force is transmitted to the rear wheel electric motor 16, and the loads of the front wheel electric motor 15 and the rear wheel electric motor 16 are reduced by the pedaling force of the driver.

Note that, in the electric bicycle 1 of Embodiment 1, the front wheel brake lever 13 and the rear wheel brake lever 14 are not constituents for only operating the front wheel brake disk brake 17 and the rear wheel disk brake 18.

Specifically, in a case such as when the driver performs an operation of squeezing the front wheel brake lever 13 and/or the rear wheel brake lever 14 to the maximum, the front wheel disk brake 17 and/or the rear wheel disk brake 18 is operated and the electric bicycle 1 is stopped by the mechanical brake structure. Meanwhile, when the driver does not squeeze the front wheel brake lever 13 and/or the rear wheel brake lever 14 to the maximum and, instead, squeezes to a degree that corresponds to the desired travel state of the driver, the squeezed amount serves as a command for a desired braking amount of the driver for the electric bicycle 1. Moreover, the front wheel controller 7 and/or the rear wheel controller 8 controls the rotation of the front wheel electric motor 15 and/or the rear wheel electric motor 16 in accordance with the braking amount corresponding to the amount that the front wheel brake lever 13 and/or the rear wheel brake lever 14 is squeezed (for control at a time of braking, control is performed so as to suppress the rotation of the front wheel electric motor 15 and/or the rear wheel electric motor 16).

### Embodiment 2

Hereinafter, an electric bicycle 1 in which regeneration control is performed is described. FIGS. 1 and 5 illustrate configurations of a case in which regeneration control is performed and, specifically, include a regeneration switch 12.

Drive control is control in which electric power is supplied from a power supply such as the battery 9 to an electric motor, namely the front wheel electric motor 15 and/or the rear wheel electric motor 16 to rotate/drive, whereas regeneration control is control in which the electric motor is operated as an electricity generator with axial rotation of the electric motor as the input, and kinetic energy is converted into electrical energy. In cases in which the electrical energy is recovered, the recovered electrical energy is used to charge the battery 9. In cases in which the electrical energy is consumed without being recovered, the electrical energy is used to supply electric power to the other electric motor or the like.

Furthermore, the regeneration control includes a function of an electric brake used for braking. Note that, when carrying out the regeneration control, the combination of the amount of kinetic energy converted into electrical energy, the amount made to function as a regeneration brake, and the like, and the amount of each control carried out can be set as desired.

The regeneration switch 12 inputs information for the regeneration control. The front wheel controller 7 and/or the rear wheel controller 8 performs the regeneration control in accordance with the information for the regeneration control from the regeneration switch 12. In FIG. 1, the regeneration switch 12 is illustrated as being provided on the handlebar 3, but may be provided at any position and is not limited to being on the handlebar 3, and the position is not limited by the shape of the regeneration switch 12. Additionally, the regeneration switch 12 may have a configuration that inputs a regeneration control amount, or may be configured as a switch for inputting ON/OFF of the regeneration control, or the like. In the case of being configured as a switch for inputting the ON/OFF of the regeneration control, the regeneration control amount may be programmed in advance in the front wheel controller 7 or the rear wheel controller 8 or the regeneration control amount may be input/set by another means such as the smartphone 23, for example, and any setting method or the like can be used.

Note that the basic configuration is that the front wheel controller 7 performs the regeneration control in accordance with the information about the regeneration control from the regeneration switch 12, and the rear wheel controller 8 performs the regeneration control in accordance with the information about the regeneration control from the regeneration switch 12, but the configuration is not limited thereto, and the number of regeneration switches and the like can be set as desired. For example, a front wheel regeneration switch that inputs information about the regeneration control of the front wheel 4 may be provided, and the front wheel controller 7 may perform the regeneration control in accordance with information about the regeneration control from the front wheel regeneration switch, or the rear wheel controller 8 may perform the regeneration control in accordance with the information about the regeneration control from the front wheel regeneration switch. Furthermore, for example, a rear wheel regeneration switch that inputs information about the regeneration control of the rear wheel 5 may be provided, and the rear wheel controller 8 may perform the regeneration control in accordance with the information about the regeneration control from the rear wheel regeneration switch, or the front wheel controller 7 may perform the regeneration control in accordance with the information about the regeneration control from the rear wheel regeneration switch. Moreover, each of the front wheel 4 and the rear wheel 5 may perform separate control such as only the front wheel controller 7 performs the regeneration control and the rear wheel controller 8 does not perform the regeneration control or, in such a case, the rear wheel controller 8 drives the rear wheel electric motor 16 without performing the regeneration control.

Note that, even when the regeneration control is performed, the regeneration switch 12 need not necessarily be provided and, for example, the regeneration control can be performed depending on the traveling situation of the electric bicycle 1. Performing the regeneration control depending on the traveling situation of the electric bicycle 1 means, for example, when the electric bicycle 1 travels downhill, upon determination, by the front wheel controller 7 and the rear wheel controller 8, of whether to perform the regeneration control by detection of the torque of the load of the front wheel 4 and/or the rear wheel 5, the vehicle speed of the electric bicycle 1, the angular velocities of the electric motors, and the like, the front wheel controller 7 and the rear wheel controller 8 perform the regeneration control by performing the detection and appropriately adjusting the regeneration control amount in the regeneration control.

Next, use methods and operations of the front wheel brake lever 13, the rear wheel brake lever 14, and the regeneration switch 12 at a time of traveling of the electric bicycle 1 are described.

The front wheel brake lever 13 emits an analog voltage operation signal proportional to the operation amount, and the front wheel controller 7 and the rear wheel controller 8 receive the operation signal of the front wheel brake lever 13, control the current and the voltage, and regenerate or stop the front wheel electric motor 15 and the rear wheel electric motor 16. The electric power generated by the regeneration control is stored in the battery 9. The regeneration control is performed in accordance with operation amounts 1 to 100 of the front wheel brake lever 13, with 100 as the maximum value of the operation amounts. The operation amounts of the front wheel brake lever 13 and the assignment of the control can be set as desired.

In the operations of the operation amounts 1 to 5 of the front wheel brake lever 13, the front wheel controller 7 controls so that the front wheel electric motor 15 is not driven, and the rear wheel controller 8 controls so that the rear wheel electric motor 16 is not driven. In the operations of the operation amounts 6 to 25 of the front wheel brake lever 13, the front wheel controller 7 controls the front wheel electric motor 15 so that the torque of the regeneration brake is less than the pedaling force, and the rear wheel controller 8 controls so that the rear wheel electric motor 16 is not driven.

In the operations of the operation amounts 26 to 50 of the front wheel brake lever 13, the front wheel controller 7 controls the front wheel electric motor 15 so that the regeneration brake torque is greater than or equal to the pedaling force, and the rear wheel controller 8 controls so that the rear wheel electric motor 16 is not driven.

In the operations of the operation amounts 51 to 75 of the front wheel brake lever 13, the front wheel controller 7 and the rear wheel controller 8 perform regeneration control of the front wheel electric motor 15 and the rear wheel electric motor 16 so that a value obtained by summing the regeneration brake torque of the front wheel electric motor 15 and the regeneration brake torque of the rear wheel electric motor 16 is greater than or equal to the pedaling force torque. In the operations of the operation amounts 76 to 100 of the front wheel brake lever 13, the mechanical brake structure of the front wheel disk brake 17 operates.

The rear wheel brake lever 14 emits an analog voltage operation signal proportional to the operation amount, and the front wheel controller 7 and the rear wheel controller 8 receive the operation signal of the rear wheel brake lever 14, control the current and the voltage, and regenerate or stop the front wheel electric motor 15 and the rear wheel electric motor 16. The electric power generated by the regeneration control is stored in the battery 9. The regeneration control is performed in accordance with operation amounts 1 to 100 of the rear wheel brake lever 14, with 100 as the maximum value of the operation amounts. The operation amounts of the rear wheel brake lever 14 and the assignment of the control can be set as desired.

In the operations of the operation amounts 1 to 5 of the rear wheel brake lever 14, the front wheel controller 7 controls so that the front wheel electric motor 15 is not driven, and the rear wheel controller 8 controls so that the rear wheel electric motor 16 is not driven. In the operations of the operation amounts 6 to 25 of the rear wheel brake lever 14, the front wheel controller 7 controls so that the front wheel electric motor 15 is not driven, and the rear wheel controller 8 performs regeneration control of the rear wheel electric motor 16 so that the regeneration brake torque is less than the pedaling force torque. In the operations of the operation amounts 26 to 50 of the rear wheel brake lever 14, the front wheel controller 7 controls so that the front wheel electric motor 15 is not driven, and the rear wheel controller 8 performs regeneration control of the rear wheel electric motor 16 so that the regeneration brake torque is greater than or equal to the pedaling force torque.

In the operations of the operation amounts 51 to 75 of the rear wheel brake lever 14, the front wheel controller 7 and the rear wheel controller 8 perform regeneration control of the front wheel electric motor 15 and the rear wheel electric motor 16 so that a value obtained by summing the regeneration brake torque of the front wheel electric motor 15 and the regeneration brake torque of the rear wheel electric motor 16 is greater than or equal to the pedaling force torque. In the operations of the operation amounts 76 to 100 of the rear wheel brake lever 14, the mechanical brake structure of the rear wheel disk brake 18 operates.

When the front wheel brake lever 13 or the rear wheel brake lever 14 is operated at operation amounts 6 to 25 while the pedals 6 are being pedaled, the regeneration brake torque is less than the pedaling force and, as such, the electrical energy can be recovered by the regeneration control while maintaining the speed of the electric bicycle 1. When the front wheel brake lever 13 or the rear wheel brake lever 14 is operated at operation amounts 26 to 75, the regeneration brake torque is greater than or equal to the pedaling force torque and, as such, the electrical energy can be recovered by the regeneration control while decelerating the electric bicycle 1. Due to the mechanical brake structure acting after the stopping control and the regeneration control of the front wheel electric motor 15 and the rear wheel electric motor 16, power consumption can be minimized and electric power recovery can be maximized.

The regeneration switch 12 emits an analog voltage operation signal proportional to the operation amount, and the front wheel controller 7 and the rear wheel controller 8 receive the operation signal of the regeneration switch 12, control the current and the voltage, and perform regeneration control at least one electric motor of the front wheel electric motor 15 and the rear wheel electric motor 16. The electric power generated by the regeneration control is stored in the battery 9. The regeneration control is performed in accordance with operation amounts 1 to 100 of the regeneration switch 12, with 100 as the maximum value of the operation amounts. The operation amounts of the regeneration switch 12 and the assignment of the control can be set as desired.

In the operations of the operation amounts 1 to 50 of the regeneration switch 12, the front wheel controller 7 and the rear wheel controller 8 perform regeneration control of the front wheel electric motor 15 and the rear wheel electric motor 16 so that a value obtained by summing the regeneration brake torque of the front wheel electric motor 15 and the regeneration brake torque of the rear wheel electric motor 16 is less than the pedaling force torque.

In the operations of the operation amounts 51 to 100 of the regeneration switch 12, the front wheel controller 7 and the rear wheel controller 8 perform regeneration control of the front wheel electric motor 15 and the rear wheel electric motor 16 so that a value obtained by summing the regeneration brake torque of the front wheel electric motor 15 and the regeneration brake torque of the rear wheel electric motor 16 is greater than or equal to the pedaling force torque.

When the regeneration switch 12 is operated at operation amounts 1 to 50 while the pedals 6 are being pedaled, the regeneration brake torque is less than the pedaling force and, as such, the electrical energy can be recovered by the regeneration control while maintaining the speed of the electric bicycle 1. When the regeneration switch 12 is operated at operation amounts 51 to 100, the regeneration brake torque is greater than or equal to the pedaling force torque and, as such, the electrical energy can be recovered by the regeneration control while decelerating the electric bicycle 1.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2020-94961, filed on April 27, 2020, the entire disclosure of which is incorporated by reference herein.

### Industrial Applicability

As described above, according to the present disclosure, an electric bicycle can be provided that is capable of suppressing power consumption.

### Reference Signs List

- 1: Electric bicycle
- 2: Frame
- 3: Handlebar
- 4: Front wheel
- 5: Rear wheel
- 6: Pedals
- 7: Front wheel controller
- 8: Rear wheel controller
- 9: Battery
- 10: Monitor
- 11: Drive throttle
- 12: Regeneration switch
- 13: Front wheel brake lever
- 14: Rear wheel brake lever
- 15: Front wheel electric motor
- 16: Rear wheel electric motor
- 17: Front wheel disk brake
- 18: Rear wheel disk brake
- 19: Chain
- 20: Gear
- 21: Ratchet
- 22: Sensor group
- 23: Smartphone

## Claims

1. An electric bicycle driven by electric power, the electric bicycle comprising:
a front wheel drivable by a front wheel electric motor that has a battery as a power supply;
a rear wheel drivable by a rear wheel electric motor that has a battery as a power supply;
pedals for inputting pedaling force of a driver to at least one of the front wheel or the rear wheel;
at least one travel operator that inputs a desired travel state of the driver;
a front wheel controller that controls a rotation of the front wheel electric motor in accordance with a situation of the front wheel and an input from the travel operator; and
a rear wheel controller that controls a rotation of the rear wheel electric motor in accordance with a situation of the rear wheel and an input from the travel operator, wherein
two electric motors, the front wheel electric motor and the rear wheel electric motor, are provided, at least one of the front wheel or the rear wheel is driven by the corresponding electric motor and a load of at least one of the front wheel electric motor or the rear wheel electric motor is reduced by the pedaling force of the driver.

2. The electric bicycle according to claim 1, further comprising:
a front wheel brake lever that inputs a braking amount of the front wheel, wherein
at least one of control, by the front wheel controller, of the rotation of the front wheel electric motor in accordance with a braking amount command from the front wheel brake lever, or control, by the rear wheel controller, of the rotation of the rear wheel electric motor in accordance with the braking amount command from the front wheel brake lever is performed.

3. The electric bicycle according to claim 1, further comprising:
a rear wheel brake lever that inputs a braking amount of the rear wheel, wherein
at least one of control, by the rear wheel controller, of the rotation of the rear wheel electric motor in accordance with a braking amount command from the rear wheel brake lever, or control, by the front wheel controller, of the rotation of the front wheel electric motor in accordance with the braking amount command from the rear wheel brake lever is performed.

4. The electric bicycle according to claim 1, further comprising:
a front wheel brake lever that inputs a braking amount of the front wheel; and
a front wheel mechanical brake structure for the front wheel, wherein
at least one of control, by the front wheel controller, of the rotation of the front wheel electric motor in accordance with a braking amount command from the front wheel brake lever, or control, by the rear wheel controller, of the rotation of the rear wheel electric motor in accordance with the braking amount command from the front wheel brake lever is performed, and
the front wheel mechanical brake structure can be operated by the front wheel brake lever.

5. The electric bicycle according to claim 1, further comprising:
a rear wheel brake lever that inputs a braking amount of the rear wheel; and
a rear wheel mechanical brake structure for the rear wheel, wherein
at least one of control, by the rear wheel controller, of the rotation of the rear wheel electric motor in accordance with a braking amount command from the rear wheel brake lever, or control, by the front wheel controller, of the rotation of the front wheel electric motor in accordance with the braking amount command from the rear wheel brake lever is performed, and
the rear wheel mechanical brake structure can be operated by the rear wheel brake lever.

6. An electric bicycle driven by electric power, the electric bicycle comprising:
a front wheel drivable by a front wheel electric motor that has a battery as a power supply;
a rear wheel drivable by a rear wheel electric motor that has a battery as a power supply;
pedals for inputting pedaling force of a driver to at least one of the front wheel or the rear wheel;
at least one travel operator that inputs a desired travel state of the driver;
a front wheel controller that controls a rotation of the front wheel electric motor in accordance with a situation of the front wheel and an input from the travel operator; and
a rear wheel controller that controls a rotation of the rear wheel electric motor in accordance with a situation of the rear wheel and an input from the travel operator, wherein
two electric motors, the front wheel electric motor and the rear wheel electric motor, are provided, at least one of the front wheel or the rear wheel is driven by the corresponding electric motor, and a load of at least one of the front wheel electric motor or the rear wheel electric motor is reduced by the pedaling force of the driver, and at least one of the front wheel controller or the rear wheel controller performs regeneration control.

7. The electric bicycle according to claim 6, wherein at least one of the front wheel controller or the rear wheel controller performs the regeneration control in accordance with a traveling situation of the electric bicycle.

8. The electric bicycle according to claim 6, further comprising:
a front wheel brake lever that inputs a braking amount of the front wheel, wherein
at least one of the regeneration control, by the front wheel controller, in accordance with a braking amount command from the front wheel brake lever, or the regeneration control, by the rear wheel controller, in accordance with the braking amount command from the front wheel brake lever is performed.

9. The electric bicycle according to claim 6, further comprising:
a rear wheel brake lever that inputs a braking amount of the rear wheel, wherein
at least one of the regeneration control, by the rear wheel controller, in accordance with a braking amount command from the rear wheel brake lever, or the regeneration control, by the front wheel controller, in accordance with the braking amount command from the rear wheel brake lever is performed.

10. The electric bicycle according to claim 6, further comprising:
a front wheel brake lever that inputs a braking amount of the front wheel; and
a front wheel mechanical brake structure for the front wheel, wherein
at least one of the regeneration control, by the front wheel controller, in accordance with a braking amount command from the front wheel brake lever, or the regeneration control, by the rear wheel controller, in accordance with the braking amount command from the front wheel brake lever is performed, and
the front wheel mechanical brake structure can be operated by the front wheel brake lever.

11. The electric bicycle according to claim 6, further comprising:
a rear wheel brake lever that inputs a braking amount of the rear wheel; and
a rear wheel mechanical brake structure for the rear wheel, wherein
at least one of the regeneration control, by the rear wheel controller, in accordance with a braking amount command from the rear wheel brake lever, or the regeneration control, by the front wheel controller, in accordance with the braking amount command from the rear wheel brake lever is performed, and
the rear wheel mechanical brake structure can be operated by the rear wheel brake lever.

12. The electric bicycle according to claim 6, further comprising:
a regeneration switch that inputs information about the regeneration control of at least one of the front wheel or the rear wheel, wherein
at least one of the regeneration control, by the front wheel controller, in accordance with the information about the regeneration control from the regeneration switch, or the regeneration control, by the rear wheel controller, in accordance with the information about the regeneration control from the regeneration switch is performed.

13. The electric bicycle according to claim 6, further comprising:
a front wheel regeneration switch that inputs information about the regeneration control of the front wheel, wherein
at least one of the regeneration control, by the front wheel controller, in accordance with the information about the regeneration control from the front wheel regeneration switch, or the regeneration control, by the rear wheel controller, in accordance with the information about the regeneration control from the front wheel regeneration switch is performed.

14. The electric bicycle according to claim 6, further comprising:
a rear wheel regeneration switch that inputs information about the regeneration control of the rear wheel, wherein
at least one of the regeneration control, by the rear wheel controller, in accordance with the information about the regeneration control from the rear wheel regeneration switch, or the regeneration control, by the front wheel controller, in accordance with the information about the regeneration control from the rear wheel regeneration switch is performed.

15. The electric bicycle according to any one of claims 1 to 14, wherein
the front wheel controller and the rear wheel controller
control the front wheel electric motor and the rear wheel electric motor such that a difference between torque of the front wheel and torque of the rear wheel is less than or equal to 10%.

16. The electric bicycle according to any one of claims 1 to 14, wherein
the front wheel controller and the rear wheel controller
control the front wheel electric motor and the rear wheel electric motor such that torque of the front wheel is greater than or equal to torque of the rear wheel.

17. The electric bicycle according to any one of claims 1 to 14, wherein
the front wheel controller and the rear wheel controller
control the front wheel electric motor and the rear wheel electric motor such that torque of the rear wheel is greater than or equal to torque of the front wheel.

18. The electric bicycle according to any one of claims 1 to 14, further comprising:
pedal torque measuring means that measure a pedaling force torque from the pedals, wherein
the front wheel controller and the rear wheel controller control such that the pedaling force torque measured by the pedal torque measuring means and a value obtained by summing torque of the front wheel electric motor and torque of the rear wheel electric motor have a predetermined ratio.

19. The electric bicycle according to any one of claims 1 to 14, wherein
the front wheel controller and the rear wheel controller
control such that an angular velocity of the front wheel electric motor and an angular velocity of the rear wheel electric motor are less than or equal to a predetermined value.

20. The electric bicycle according to any one of claims 1 to 14, wherein
the front wheel controller and the rear wheel controller
control such that a value obtained by summing a motor output of the front wheel electric motor and a motor output of the rear wheel electric motor is less than or equal to a predetermined value.
